# EUROPEAN PATENT APPLICATION

(11) **EP 4 067 203 A2**
(43) Date of publication of application: **05.10.2022**
(21) Application number: 22160112.3
(22) Date of filing: 04.03.2022
(51) Int. Cl.: B61L 25/02, B61L 27/40

(54) **VEHICLE SENSOR SYSTEM**

(30) Priority: 10.03.2021 US 202163159020 P; 21.10.2021 US 202117507657
(71) Applicant: Transportation IP Holdings, LLC, Norwalk, CT 06851 (US)
(72) Inventor: Kraeling, Mark Bradshaw, 16531 Erie (US); Shaffer, Glenn Robert, 16531 Erie (US); Worden, Bret, 16531 Erie (US)
(74) Representative: Laufhütte, Dieter

(57) **Abstract**

A vehicle sensor unit includes a communication device configured to communicate with one or more other sensor units, a controller of a vehicle system on which the vehicle sensor unit is disposed, and one or more sensors; a sensor configured to sense one or more characteristics of a vehicle on which the vehicle sensor unit is disposed; and a controller configured to determine one or more operating conditions of the vehicle based on the one or more characteristics that are sensed by the sensor. The controller is configured to control the communication device to communicate the one or more characteristics, the one or more operating conditions, or both the one or more characteristics and the one or more operating conditions. The communication device and the sensor are configured to be disposed onboard the vehicle that does not have an internal source of electric power.

## Description

### CROSS-REFERENCE TO RELATED APPLICATIONS

This application claims priority to U.S. Provisional Application No. 63/159,020 (filed 10-March-2021), the entire disclosure of which is incorporated herein by reference.

### BACKGROUND

### Technical Field.

The subject matter described herein relates to sensors disposed onboard vehicles, such as rail vehicles, automobiles, marine vessels, mining vehicles, or the like.

### Discussion Of Art.

Vehicles and vehicle systems such as rail vehicles (e.g., trains), automobiles, mining vehicles, etc. can include a variety of sensors that monitor characteristics of the vehicles and/or ambient conditions. The sensed characteristics can be used to control the vehicles, determine issues or faults with the vehicles, etc.

One issue with sensors onboard some vehicles is the availability of power. Some vehicles may not have an onboard source of electric power. For example, rail cars typically do not include an onboard generator, alternator, or other device that can generate electric current. Sensors disposed onboard these types of vehicles may need to rely on internal power, such as a battery. This can limit how many sensors can be provided onboard a vehicle without an onboard power source, as more sensors can require more batteries, which can require more frequent servicing of the sensors, less reliable sensors, etc. As a result, the rail industry (and other vehicle-based industries) tend to not include many sensors onboard these types of vehicles, and less information can be sensed for these vehicles.

A need exists for improved sensors and systems that can sense characteristics of vehicles without onboard sources of power.

### BRIEF DESCRIPTION

In one embodiment, a vehicle sensor unit includes a communication device that may communicate with one or more other sensor units, a controller of a vehicle system on which the vehicle sensor unit is disposed, and one or more sensors. The sensor(s) may sense one or more characteristics of a vehicle on which the vehicle sensor unit is disposed. The controller may determine one or more operating conditions of the vehicle based on the one or more characteristics that are sensed by the sensor. The controller may control the communication device to communicate the one or more characteristics and/or the one or more operating conditions. The communication device and the sensor may be disposed onboard the vehicle that does not have an internal source of electric power.

In one embodiment, a method for providing a vehicle sensor system includes providing or installing sensor units and (optionally) additional sensors, beacon devices, radio frequency identification (RFID) tags, or the like, onboard vehicles in a vehicle system. The sensor units can be installed on vehicles that do not have an engine, alternator, or generator onboard, and that do not have the ability to receive electric current from a catenary or electrified rail. The method also includes sensing characteristics using the sensor(s) in the sensor units and, optionally, other sensors that communicate the sensed characteristics to the sensor units. The characteristics can be examined by the controller of the sensor units to determine one or more operational conditions of the vehicle and/or vehicle system. For example, the vehicle weight and/or cargo weight (e.g., the difference between the total measured weight and the known unloaded vehicle weight) can be determined, the open or closed state of a door or latch can be determined, the location of the vehicle can be determined, defects or irregularities with the wheels or route can be determined, etc. The sensor units can communicate the sensed characteristics with each other and/or off-board systems. A controller of a vehicle system can use the sensed characteristics and/or derived conditions to control or change movement of the vehicle system. For example, the controller can slow down a vehicle that is loaded with too much cargo, that has a wheel with a flat spot, and the like.

### BRIEF DESCRIPTION OF THE DRAWINGS

The inventive subject matter described herein will be better understood from reading the following description of non-limiting embodiments, with reference to the attached drawings, wherein below:
Figure 1 illustrates one example of a sensor system onboard a vehicle system;
Figure 2 illustrates one example of the sensor unit shown in Figure 1; and
Figure 3 illustrates another example of the sensor unit determining whether a vehicle door is open or closed.

### DETAILED DESCRIPTION

Reference will be made below in detail to example embodiments of the inventive subject matter, examples of which are illustrated in the accompanying drawings. Wherever possible, the same reference numerals used throughout the drawings refer to the same or like parts. Although embodiments of the inventive subject matter are described with respect to vehicles and vehicle systems such as trains, locomotives, and other rail vehicles, embodiments of the inventive subject matter are also applicable for use with vehicles generally, such as off-highway vehicles (e.g., vehicles that are not designed or permitted to travel on public roadways), agricultural vehicles, mining vehicles, marine vessels, and/or transportation vehicles, each of which may include a vehicle consist. A vehicle system may be formed from two or more vehicles that communicate with each other to coordinate travel of the vehicle system, but that are not mechanically linked with each other. For example, a vehicle system may include two or more vehicles that wirelessly communicate with each other so that the different vehicles may change the respective speeds, tractive efforts, braking efforts, and the like, to cause the separate vehicles to travel together as a convoy or other group along the same route. Optionally, the vehicles can be coupled with each other. A vehicle system may be formed from a single vehicle or two or more vehicles. A vehicle system having two or more vehicles can be referred to as a multi-vehicle system.

The vehicles described herein can include those with an onboard source of electric power and those without any onboard source of electric power. The vehicles having the onboard source of power can include vehicles that have alternators, generators, or the like, for generating electric current onboard the vehicle and/or vehicles that are able to obtain current from an off-board source (e.g., vehicles with pantographs, conductive shoes, or the like, for obtaining current from a catenary, electrified rail, or the like). The vehicles not having the onboard source of power can include vehicles that do not have alternators, generators, pantographs, conductive shoes, etc. Examples of vehicles having the onboard source of power include locomotives, automobiles, trucks, tug boats or tow boats, etc. Examples of the vehicles not having the onboard source of power include rail cars, trailers, barges, etc.

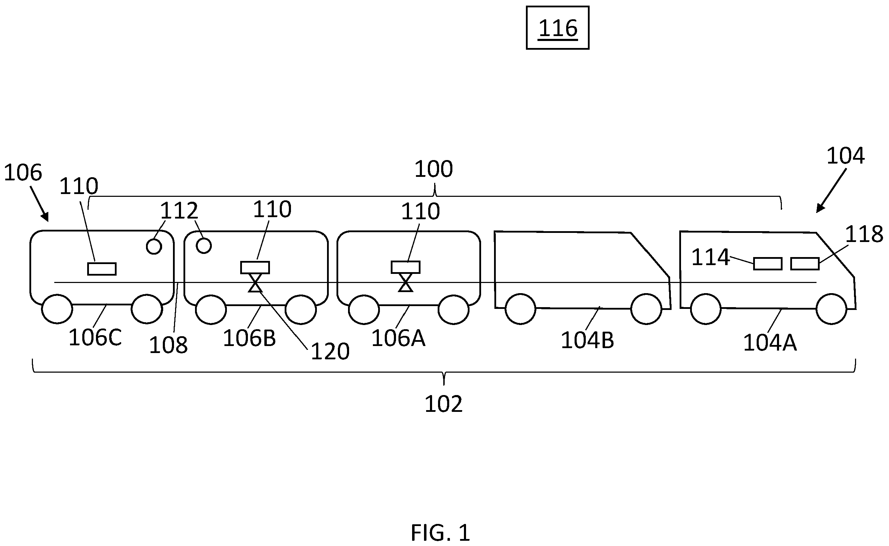

Figure 1 illustrates one example of a sensor system 100 onboard a vehicle system 102. The vehicle system includes two vehicles 104 (e.g., vehicles 104A, 104B) having the onboard source of power and three vehicles 106 (e.g., vehicles 106A-C) that do not have an onboard source of power. The vehicles 104 may be propulsion-generating vehicles that include or represent one or more engines, alternators, generators, traction motors, or the like, for propelling the vehicle system. The propulsion-generating vehicles can be locomotives, automobiles, trucks, tow or tug boats, etc. The vehicles 106 may be nonpropulsion-generating vehicles that may not generate propulsion to move the vehicle system. These vehicles may be rail cars, trailers, barges, or the like. The number and arrangement of the vehicles in Figure 1 are provided as one example, and a greater or lesser number of vehicles 104, 106 may be provided and/or the arrangement of the vehicles 104, 106 may differ from what is shown in Figure 1. The vehicles can be coupled with each other (e.g., by couplers) to travel together along routes. Alternatively, two or more of the vehicles may be separate from each other, but can communicate with each other so that the vehicles travel together as the vehicle system (e.g., as a convoy). The vehicle system may have a brake system, such as an air brake system that includes a brake pipe 108 conveying air along the length of the vehicle system to control braking of the vehicle system.

The sensor system includes sensor units 110 disposed onboard one or more of the vehicles 106 and, optionally, onboard one or more of the vehicles 104. Alternatively, the sensor units may be disposed only onboard one or more of the vehicles 106. The sensor system optionally includes one or more additional sensors 112 disposed onboard the vehicles 104 and/or 106. Alternatively, the additional sensors are only disposed onboard the vehicle(s) 106. As described herein, the sensor units can sense characteristics of the vehicles and/or vehicle system, and optionally can communicate with the additional sensors. The sensor units can determine or derive operational conditions of the vehicles and/or vehicle system (determined or derived from the sensed characteristics). The sensor units can communicate the sensed characteristics and/or operational conditions between each other, with a controller 114 disposed onboard at least one of the vehicles 104, and/or one or more off-board systems 116.

The controller represents hardware circuitry that includes and/or is connected with one or more processors (e.g., microprocessors, field programmable gate arrays, integrated circuits, etc.) that operate to control movement of the vehicle system. The controller can respond to sensed characteristics and/or operational conditions and slow, stop, or otherwise change movement of the vehicle system based on the sensed characteristics and/or derived conditions. The controller can control movement of the vehicle system by controlling a propulsion system (e.g., traction motors, engines, alternators, etc.) and/or the brake system of the vehicles or vehicle system. The off-board system can represent a vehicle dispatch facility, a scheduling center, a back office server of a vehicle control system, etc.

The vehicle control system can be a positive control system (e.g., Positive Train Control system) that monitors locations of vehicle systems, locations of maintenance, etc. and communicates signals to the vehicle systems to inform the vehicle systems of which route segments or areas that the vehicle systems are allowed to enter into. Alternatively, the vehicle control system can be a negative control system that monitors locations of vehicle systems, locations of maintenance, etc. and communicates signals to the vehicle systems to inform the vehicle systems of which route segments or areas that the vehicle systems are not allowed to enter into. The components of the vehicle system and/or sensor system may be operably connected by one or more wired and/or wireless connections.

The sensors can represent a variety of devices that monitor characteristics of the vehicle system and/or the environment around the vehicle system. The sensor units optionally can include one or more of the sensors, as described herein. The sensors may include temperature sensors (e.g., sensors that output data representative of temperatures of the vehicles and/or environment, such as hot box detectors, infrared cameras, etc.), vibration sensors (e.g., sensors that output data representative of movement in one or more directions, such as accelerometers), pressure sensors (e.g., sensors that output data representative of fluid pressure, such as air pressure in tires of the vehicles, pressures of oil or other lubricants in gear boxes and/or engines, etc.), fluid sensors (e.g., sensors that output data representative of an oil or other fluid level, or how much fluid, oil or other lubricant is in gear boxes, engines, etc.), positioning sensors (e.g., sensors that output data representative of geographic or other locations, such as a global positioning system receiver, a global navigation satellite system receiver or GNSS receiver, etc.), speed sensors (e.g., sensors that output data representative of how rapidly a vehicle is moving, how rapidly a wheel and/or axle is rotating, etc.), acoustic sensors (e.g., sensors that output data representative of sounds, such as microphones), optic sensors (e.g., sensors that output data representative of images and/or videos, such as cameras, infrared detectors), electromagnetic sensors (e.g., sensors that obtain and/or output data using electromagnetic waves, such as radio frequency identification interrogators or tags), etc.

In one embodiment, one or more of the sensor units is disposed on or otherwise coupled with a valve 120 of the brake system. For example, the sensor unit can be disposed on or otherwise coupled with a brake valve interface to the valve. This valve can control the flow of air between the brake pipe and a brake cylinder in one embodiment. The sensor unit can be coupled with the valve to enable one or more sensors in the sensor unit to measure pressures in the brake pipe, the flow of air passing through the valve, a state of the valve (e.g., open, closed, in one of several different states, etc.).

The sensor unit can operate as a central unit that obtains sensed characteristics (e.g., from the internal sensors of the sensor unit) and/or gathers sensed characteristics from other sensors. For example, the sensor unit in a rail car can gather the output from sensors onboard the same rail car. Different sensor units onboard different rail cars can obtain the output from the sensors onboard the same rail car, but not from sensors onboard other rail cars. Alternatively, one or more sensor units can receive output from a sensor onboard another rail car. The sensor units can communicate with each other to share sensed characteristics and/or derived conditions among or between the rail cars.

At least one vehicle of the vehicle system can include a communication device 118 capable of communicating with the off-board system(s) and/or other vehicle systems. This communication device can have transceiving hardware that allows the communication device to wirelessly communicate, such as a cellular transceiver, other transceiver, modem, etc. The communication device can communicate with the sensor units of the vehicle system to receive sensed characteristics and/or derived conditions from the sensor units.

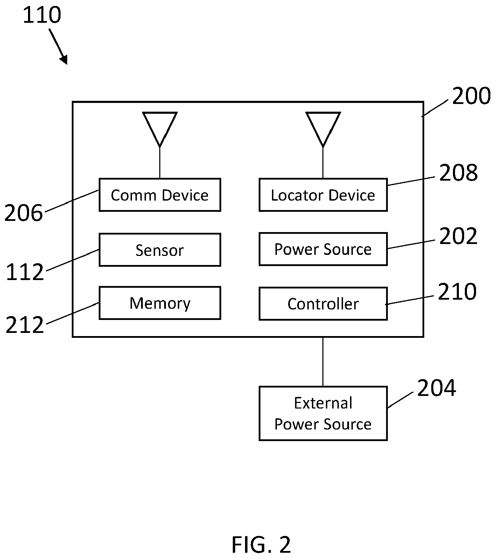

Figure 2 illustrates one example of the sensor unit shown in Figure 1. The sensor unit includes a housing 200 in which components of the sensor unit can be disposed. The sensor unit can include one or more sensors 112, such as a motion sensor that detects movement in different directions (e.g., an accelerometer, such as a nine-axis accelerometer or other type of accelerometer; an inertial sensor; or the like). While only one sensor is shown in Figure 2, alternatively, the sensor unit can include multiple sensors. For example, the sensor unit can include a pressure sensor that measures one or more air pressures of the brake system (e.g., brake cylinder pressure, brake pipe pressure, auxiliary reservoir pressure, emergency reservoir pressure, etc.). Optionally, one or more other sensors may be included.

The sensor unit can include an internal power source 202, such as one or more batteries. The internal power source can be rechargeable by removing the power source from the housing and charging or replacing, by connecting an external power source 204 with the internal power source. This external power source can be an energy harvester device, such as a device that converts vibrations or other movements of the vehicle into electric current to charge the internal power source, a solar panel, a turbine, etc.

The sensor unit can include a locator device 208 that receives data signals and can determine a location of the sensor unit based on those data signals. For example, the locator device can represent a GNSS receiver, a global positioning system (GPS) receiver, or the like. The sensor unit can include a controller 210, such as hardware circuitry that includes and/or is connected with one or more processors. The controller can receive the output from the locator device, internal sensors of the sensor unit, and/or sensors external to the sensor unit. The controller can use these outputs and calculate the derived characteristics. The controller can control operation of the sensor unit, such as when the controller unit is activated or wakes up from a deactivated or dormant state, when the sensor unit communicates signals, etc.

The sensor unit can include a communication device 206 that can communicate sensed characteristics and/or derived conditions to other devices. This communication device can represent transceiving hardware, such as one or more antennas, modems, etc. The communication device can wirelessly communicate signals and/or communicate signals via one or more wired connections. The communication device can receive sensed characteristics from sensors external to the sensor unit, can receive sensed characteristics and/or derived conditions from other sensor units, and/or can send sensed characteristics and/or derived conditions to other sensor units. The communication device of the sensor unit can communicate sensed characteristics and/or derived conditions to the communication device 118 shown in Figure 1. The communication device of the sensor unit may have too short of a range to communicate signals to devices other than the sensor unit in the same vehicle. The communication device of the sensor unit can communicate the sensed characteristics and/or derived conditions with the communication device 118, which can then communicate the sensed characteristics and/or derived conditions with off-board systems, such as the off-board system 116, other vehicle systems, etc. The reduced range of the communication device in the sensor unit (relative to the communication device 118) can reduce the energy consumed by the sensor unit (relative to using a longer range communication device). This can allow for the internal power source to power the sensor unit for longer (compared to using a longer range communication device).

The communication device may attempt to join any available wireless network, such as a LoRA network of sensors, an Internet-of-Things (IoT) network, a WiFi network, or the like, to communicate sensed characteristics and/or derived conditions to the off-board systems, other sensor units, and/or the controller of the vehicle system. In one embodiment, the communication device of the sensor unit may join a network that is onboard another vehicle system (that does not include the vehicle on which the sensor unit is disposed). For example, the sensor unit onboard a first vehicle may be able to join a wireless network generated onboard a second vehicle system that is near or passing by the first vehicle and that does not include the first vehicle. The sensor unit can wirelessly communicate sensed characteristics and/or derived conditions to another sensor unit on the second vehicle system, the controller of the second vehicle system, or another communication device on the second vehicle system. The second vehicle system can then communicate the received information to an off-board system or another location. This way, the sensor unit can be able to communicate information to the off-board system even when the first vehicle is stranded or not moving. This can be helpful when the sensor unit needs to communicate the location of the stranded vehicle back to a back-office.

As another example, the sensor units on different vehicles can communicate with each other so that vehicles created by different manufacturers and/or owned by different companies can communicate with each other. For example, a first vehicle may not have the ability to communicate using cellular communication and the first vehicle has not been able to communicate with the off-board system (to report the location of the first vehicle) for a long period of time. The sensor unit of the first vehicle can communicate information (e.g., an identity of the first vehicle or of the sensor unit, a direction of movement, a location, etc.) to another sensor unit on a second vehicle that does have cellular communication capability. The measured speeds and/or directions of movement of the sensor units can be compared (by a controller of at least one of the sensor units or by the off-board system) to determine whether the first and second vehicles are in the same vehicle system or different vehicle systems.

The sensor unit can operate as a load sensor that determines the weight of the vehicle and/or how much weight is carried by the vehicle (in which the sensor unit is disposed). For example, loading cargo into a rail car (liquid cargo, solid cargo, passengers, etc.) can cause the rail car to move or shift in one or more directions. While these movements or shifts may be slight (e.g., less than five centimeters), the motion sensor in the sensor unit can detect these movements along different directions. The measured movements can be the sensed characteristics measured by the sensor unit. The controller of the sensor unit can examine the measured movements and calculate (or estimate) the amount of weight carried by the vehicle. For example, larger movements measured by the motion sensor can indicate greater cargo weight being loaded onto the vehicle, while smaller movements measured by the motion sensor can indicate lesser weight being loaded onto the vehicle. Optionally, the controller can use the type of vehicle and the movements measured by the motion sensor to determine the amount of cargo loaded onto the vehicle. For example, different types of rail cars (e.g., autorack, centerbeam, hopper, flatcar, coil car, boxcar, gondola, tank car, well car, or the like) may move different amounts when different weights of cargo are loaded onto the rail cars. These movement amounts associated with the different rail car types and cargo weights can be stored (e.g., in an internal or external memory 212 of the controller) and accessible by the controller to determine the cargo weight based on the measured movements and the type of rail car (which can be input or programmed into the controller). Use of the movements measured by the motion sensor in the sensor unit can reduce or eliminate the need for additional load sensors on the vehicle. Alternatively, the sensor unit can be used as a backup load sensor on the vehicle in the event that another load sensor fails, runs out of stored energy, etc.

As another example, the controller of the sensor unit may examine a series, sequence, or other group (e.g., non-sequential set) of movements measured by the motion sensor to determine whether the vehicle on which the sensor unit is disposed is loaded (or unloaded) with cargo. For example, in a mining operation, an unloaded vehicle may slow down and/or stop before receiving cargo (e.g., ore) being dumped onto the vehicle. The motion sensor may measure a reduced speed and/or stoppage of the vehicle, followed by a sudden shock or short-term vibration (e.g., less than thirty seconds) as the cargo is being dumped onto the vehicle. The controller of the sensor unit may examine this sequence of reduced speed (and potentially stopping) followed by the sudden shock and determine that the vehicle is now loaded with cargo. As another example, a vehicle such as a rail car may be unloaded by entering a rotary dumper system, which rotates the vehicle such that cargo carried by the vehicle is dumped out of the vehicle while the vehicle is upside down or partially upside down. The motion sensor may detect the rotation of the vehicle and the controller of the sensor unit can examine the measured rotation of the vehicle (by the motion sensor) to determine that the vehicle is unloaded or empty of the cargo previously carried by the vehicle.

As another example, the controller of the sensor unit can examine the movements measured by the motion sensor to determine whether there is a resonant frequency to the measured movements. For example, suspension systems of vehicles may repeatedly exhibit the same side-to-side and/or vertical vibrations during movement. Different types of vehicles moving at different speeds and carrying different cargo weights may be associated with different resonant frequencies. Different sets of (a) vehicle type, (b) moving speed, and (c) resonant frequency of measured movements may be associated (in an internal or external memory) with different cargo weights or loaded weights. The controller of the sensor unit can find the set that includes the same vehicle type as the vehicle on which the sensor unit is disposed, the same moving speed that the motion sensor and/or locator device measured, and the same resonant frequency calculated by the controller of the sensor unit from the movements measured by the motion sensor. The controller can identify the cargo or loaded weight associated with this set of information as the weight or amount of the cargo carried by the vehicle.

As another example, the controller of the sensor unit can determine the vehicle weight (and/or the cargo weight) based on movements measured by the motion sensor as a function of the weight. During run-in or run-out of the vehicle system, the vehicles may move closer together to increase slack in couplers between the vehicles ("run-in") or move farther apart to reduce slack in the couplers ("run-out"). There may be a jarring movement of the vehicle having a sensor unit when the vehicles move together during run-in (e.g., due to impact of the vehicles against each other) and when the vehicles move apart during run-out (e.g., due to the coupler between the vehicles being unable to stretch apart any more). These movements at the end of a run-in or a run-out can differ for different vehicle types and/or vehicle weights. The controller of the sensor unit can examine the movements measured by the motion sensor and based on the vehicle type, determine the vehicle weight. Alternatively, the measured movements at the end of a run-in or a run-out can differ for different vehicle weights and the controller of the sensor unit can examine the movements measured by the motion sensor to determine the vehicle weight.

As another example, the controller of the sensor unit can determine the vehicle weight (and/or the cargo weight) based on movements measured by the motion sensor caused by irregularities in a route as a function of weight. Vehicles may move differently when moving over gaps in a rail, pot holes in a road, or moving other non-smooth surfaces depending on the weight of the vehicle (and, therefore, the weight of the cargo carried by the vehicle). The controller can examine the movements measured by the motion sensor and determine the vehicle weight. For example, different patterns or signatures of movements may be associated with different vehicle weights. The controller can compare the measured movements with the patterns or signatures of movements to estimate the vehicle weight.

The sensor unit can operate as a wheel defect sensor that identifies issues with one or more wheels of the vehicle, such as a flat spot along the circumference of the wheel that contacts the route. The motion sensor in the sensor unit can measure vibrations of the vehicle on which the sensor unit is disposed. The controller in the sensor unit can examine these vibrations and determine whether the vibrations indicate a flat spot in the wheel. For example, the controller can examine the measured vibrations and determine that the magnitudes of the vibrations on a left lateral side of the vehicle are larger than the magnitudes of the vibrations on the other (e.g., right) lateral side of the vehicle. The controller can determine from these vibrations that the flat spot is on the left side of the vehicle. The controller can examine the measured vibrations and determine that the magnitudes of the vibrations toward a first end (e.g., the front or leading end) of the vehicle are larger than the magnitudes of the vibrations toward the opposite second end (e.g., the rear or trailing end) of the vehicle. From these vibrations, the controller can determine that the flat spot is in a wheel that is on the left side of the vehicle toward the front or leading end of the vehicle.

The motion sensor may measure periodic or oscillating movements of the vehicle during movement. For example, the vehicle may periodically move laterally back-andforth. The controller can examine these movements measured by the motion sensor and determine that the vehicle is hunting (or that a truck of the rail vehicle is hunting). Hunting of the vehicle or truck can indicate a defect in a wheel, such as a hollow wheel, an uneven surface or outer circumference of the wheel, or other issues. The controller can identify these potential wheel faults by examining the movements measured by the motion sensor.

The controller of the sensor unit can identify when the vehicle couples with another vehicle and/or when the vehicle system that includes the vehicle (having the sensor unit) adds another vehicle. For example, the motion sensor in the sensor unit disposed onboard the vehicle 106A may detect a larger magnitude vibration or movement when the vehicle 106B directly couples with the vehicle 106A (e.g., with no vehicle between the vehicles 106A, 106B during coupling). The motion sensor may detect a smaller magnitude vibration or movement when the vehicle 106C indirectly couples with the vehicle 106A (e.g., couples with the vehicle 106A via the vehicle 106B), an even smaller magnitude vibration or movement when another vehicle couples with the vehicle 106C, and so on. The controller of the sensor unit can examine the magnitude of the vibrations or movements to determine whether a vehicle is directly coupling with the vehicle having the sensor unit, or if a vehicle is indirectly coupling with the vehicle having the sensor unit (via one or more intervening vehicles). The controller can determine when a vehicle is added to a vehicle system and may estimate how many vehicles are added to the vehicle system by examining a history of the magnitudes of measured movements. For example, as several vehicles are coupled with the vehicle system, the motion sensor can measure increasingly smaller movements as each vehicle is added due to the jarring movement caused by a vehicle coupling with the vehicle system becoming smaller as the added vehicles are farther from the sensor unit.

Optionally, the sensor shown in Figure 2 within the sensor unit may be an RFID reader. This RFID reader can be directed by the controller of the sensor unit to read RFID tags within a field of view of the RFID reader. For example, passive RFID tags can be added to interior surfaces of the vehicle that includes the sensor unit. These tags may be placed such that, when doors of the vehicle are open (e.g., by sliding the doors over the tags), the RFID reader of the sensor unit is unable to read information from the tag due to the door blocking passage of the electromagnetic waves emitted by the RFID reader. This can indicate to the controller of the sensor unit that the doors are open. If the RFID reader is able to read information from the tag, then the controller can determine that the doors of the vehicle are closed. The RFID reader may only occasionally attempt to read the tags to save energy or to avoid consuming more battery energy (e.g., from attempting to read from the tag more often). Additionally, the tags in the vehicle may be passive tags that are not powered by a battery or other power source, but that respond to the energy from the electromagnetic waves emitted by the RFID reader.

Optionally, the sensor unit can include an acoustic sensor (e.g., a microphone or piezoelectric body). The acoustic sensor can measure sounds and the controller of the sensor unit can examine patterns or signatures of the sounds to identify conditions of the vehicle. For example, failed or nearly failed bearings, defects in wheels, etc., may be associated with different patterns or signatures of sounds. The controller can identify one or more of these conditions based on the sounds that are measured.

The controller of the sensor unit can place the sensor unit into a deactivated or sleep state to conserve energy stored in the internal power source. In this state, one or more of the sensors, the communication device, the locator device, etc., may be turned off or otherwise not consuming energy stored in the internal power source. Responsive to one or more actions occurring, the controller can place the sensor unit into an activated or on state. In this state, one or more of the sensors, the communication device, the locator device, etc., may be turned on or otherwise consuming energy stored in the internal power source. In one example, the controller and the motion sensor may remain activated while other components are deactivated in the deactivated or sleep state. Responsive to detecting motion due to vibration or shock detected by the motion sensor, the controller can switch the sensor unit from the deactivated state to the activated state. As another example, at least one of the sensors in the sensor unit can be a pressure sensor that measures the air pressures in the brake pipe. The controller can activate the sensor unit from the deactivated state responsive to the pressure sensor detecting a change in brake pipe pressure (e.g., an increase in pressure due to the vehicle system preparing to release brakes and begin moving). As another example, the controller can switch the sensor unit from the deactivated state to the activated state responsive to an acoustic sensor detecting one or more sounds.

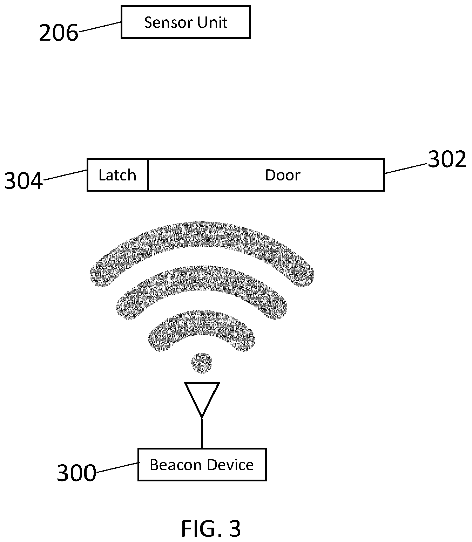

Figure 3 illustrates another example of the sensor unit determining whether a vehicle door is open or closed. The sensor in the sensor unit can measure the strength of wireless signals emitted by a beacon device 300. This beacon device can repeatedly emit wireless signals. The beacon device can be positioned along an inside wall of the vehicle similar to the RFID tag such that, when a door 302 of the vehicle is open, the door is between the beacon device and the sensor unit. This can change the strength (or gain) of the signal that is received by the sensor unit. The controller of the sensor unit can identify the door as open when the strength of the signal from the beacon device decreases and can identify the door as closed when the strength of the signal from the beacon device increases. As another example, the beacon device can be positioned under a latch 304 that is used to secure the vehicle door in a closed position. When the latch is in a closed position or state, the latch may be between the beacon device and the sensor unit. As described above, this can weaken the strength of the signal emitted by the beacon device and received by the sensor unit. When the latch is in an open position or state, the latch may not be between the beacon device and the sensor unit. This can increase the strength of the signal emitted by the beacon device and received by the sensor unit. The controller can identify the door as open (and unlocked) or closed (and locked) based on the received signal strength. Optionally, the controller can average the measured strengths of the signal from the beacon device to account for multipath receipt of the signal by the sensor unit. The controller can monitor the signal strengths over time and adjust or bias the measured strengths to account for changes in the environment (e.g., due to changes in temperature impacting the signal strength).

In one embodiment, the controller may have a local data collection system deployed that may use machine learning to enable derivation-based learning outcomes. The controller may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the controller may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one embodiment, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

In one embodiment, a method for providing a vehicle sensor system includes providing or installing sensor units and (optionally) additional sensors, beacon devices, RFID tags, or the like, onboard vehicles in a vehicle system. The sensor units can be installed on vehicles that do not have an engine, alternator, or generator onboard, and that do not have the ability to receive electric current from a catenary or electrified rail. The method also includes sensing characteristics using the sensor(s) in the sensor units and, optionally, other sensors that communicate the sensed characteristics to the sensor units. The characteristics can be examined by the controller of the sensor units to determine one or more operational conditions of the vehicle and/or vehicle system. For example, the vehicle weight and/or cargo weight (e.g., the difference between the total measured weight and the known unloaded vehicle weight) can be determined, the open or closed state of a door or latch can be determined, the location of the vehicle can be determined, defects or irregularities with the wheels or route can be determined, etc. The sensor units can communicate the sensed characteristics with each other and/or off-board systems. A controller of a vehicle system can use the sensed characteristics and/or derived conditions to control or change movement of the vehicle system. For example, the controller can slow down a vehicle that is loaded with too much cargo, that has a wheel with a flat spot, and the like.

In one embodiment, a vehicle sensor unit includes a communication device that may communicate with one or more other sensor units, a controller of a vehicle system on which the vehicle sensor unit is disposed, and one or more sensors. The sensor(s) may sense one or more characteristics of a vehicle on which the vehicle sensor unit is disposed. The controller may determine one or more operating conditions of the vehicle based on the one or more characteristics that are sensed by the sensor. The controller may control the communication device to communicate the one or more characteristics, the one or more operating conditions, or both the one or more characteristics and the one or more operating conditions. The communication device and the sensor may be disposed onboard the vehicle that does not have an internal source of electric power.

The vehicle may not have the internal source of the electric power that is an alternator or generator. The sensor may be one or more of an accelerometer or an inertial sensor. The controller may determine a weight of cargo loaded onto the vehicle based on one or more movements sensed by the sensor. The controller may identify a flat spot on a wheel of the vehicle based on one or more movements sensed by the sensor. The controller may identify which wheel of several wheels of the vehicle or which truck of several trucks of the vehicle includes a wheel flat spot based on one or more movements sensed by the sensor. The controller may determine when the vehicle is being loaded with cargo based on one or more movements sensed by the sensor.

The controller may determine when the vehicle is being unloaded with cargo based on one or more movements sensed by the sensor. The controller may examine strengths of wireless signals received by the communication device from a beacon device and determine whether a door of the vehicle is open or closed based on the strengths of the wireless signals that are received. The controller may examine strengths of wireless signals received by the communication device from a beacon device and determine whether a door latch of the vehicle is open or closed based on the strengths of the wireless signals that are received. The communication device may join a wireless network onboard the vehicle system or another vehicle system for communicating the one or more characteristics, the one or more operating conditions, or both the one or more characteristics and the one or more operating conditions. The sensor may include a GNSS receiver and the controller may determine a location of the vehicle based on output from the GNSS receiver. The communication device may wirelessly communicate the location of the vehicle to another vehicle system moving by the vehicle. The communication device may communicate with the one or more other sensor units disposed onboard other vehicles in the same vehicle system.

The communication device may receive an identification, direction of movement, and/or speed of the vehicle from the one or more other sensor units onboard another vehicle, and the controller may determine whether the other vehicle is in the same vehicle system as the communication device, the controller, and the sensor. The controller may activate the communication device from a deactivated or dormant state based on the one or more characteristics that are sensed. The controller may activate the communication device responsive to the sensor detecting movement of the vehicle. The sensor may be a pressure sensor that measures a brake pipe pressure of the vehicle system and the controller may activate the communication device responsive to the sensor detecting a decrease in the brake pipe pressure. The sensor may be an RFID reader and the controller may determine that a door of the vehicle is open or closed based on an ability of the RFID reader to read an RFID tag coupled with the vehicle. The sensor may sense motion of the vehicle, and the controller may identify truck hunting of the vehicle based on the motion that is sensed. The sensor may be an acoustic sensor and the controller may identify a failed bearing or a wheel defect of the vehicle based on output from the acoustic sensor.

In one embodiment, a method includes, as first step, sensing one or more characteristics of a vehicle or vehicle system using one or more sensors of a first sensor unit disposed onboard the vehicle or vehicle system. In a second step, a communication device communicates with the first sensor unit, a controller of the vehicle or vehicle system, and, optionally, one or more other sensor units. In a third step, the controller determines one or more operating conditions of the vehicle or vehicle system based on the one or more characteristics that are sensed by the sensor(s). The communication device and the sensor unit may be disposed onboard the vehicle or vehicle system and not have an internal source of electric power.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the inventive subject matter without departing from its scope. While the dimensions and types of materials described herein are intended to define the parameters of the inventive subject matter, they are by no means limiting and are exemplary embodiments. Many other embodiments will be apparent to those of ordinary skill in the art upon reviewing the above description. The scope of the inventive subject matter should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose several embodiments of the inventive subject matter and also to enable any person of ordinary skill in the art to practice the embodiments of the inventive subject matter, including making and using any devices or systems and performing any incorporated methods. The patentable scope of the inventive subject matter is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

The foregoing description of certain embodiments of the inventive subject matter will be better understood when read in conjunction with the appended drawings. To the extent that the figures illustrate diagrams of the functional blocks of various embodiments, the functional blocks are not necessarily indicative of the division between hardware circuitry. Thus, for example, one or more of the functional blocks (for example, processors or memories) may be implemented in a single piece of hardware (for example, a general purpose signal processor, microcontroller, random access memory, hard disk, and the like). Similarly, the programs may be stand-alone programs, may be incorporated as subroutines in an operating system, may be functions in an installed software package, and the like. The various embodiments are not limited to the arrangements and instrumentality shown in the drawings.

As used herein, an element or step recited in the singular and proceeded with the word "a" or "an" should be understood as not excluding plural of said elements or steps, unless such exclusion is explicitly stated. Furthermore, references to "one embodiment" of the inventive subject matter are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property.

## Claims

1. A vehicle sensor unit comprising:
a sensor configured to sense one or more characteristics of a vehicle on which the vehicle sensor unit is disposed, the vehicle not having an internal source of electric power from which to power the sensor;
a controller configured to control operation of the vehicle; and
a communication device configured to communicate with the sensor and the controller, the communication device configured to communicate the one or more characteristics from the sensor to the controller, the controller configured to determine one or more operating conditions of the vehicle based on the one or more characteristics that are sensed by the sensor, the controller configured to control the communication device to communicate the one or more characteristics, the one or more operating conditions, or both the one or more characteristics and the one or more operating conditions, wherein the communication device and the sensor are configured to be disposed onboard the vehicle.

2. The vehicle sensor unit of claim 1, wherein the sensor is one or more of an accelerometer or an inertial sensor or wherein the controller is configured to determine a weight of cargo loaded onto the vehicle based on one or more movements sensed by the sensor or wherein the controller is configured to identify a flat spot on a wheel of the vehicle based on one or more movements sensed by the sensor.

3. The vehicle sensor unit of claim 1, wherein the controller is configured to identify which wheel of several wheels of the vehicle or which truck of several trucks of the vehicle includes a wheel flat spot based on one or more movements sensed by the sensor or wherein the controller is configured to determine when the vehicle is being loaded or unloaded with cargo based on one or more movements sensed by the sensor.

4. The vehicle sensor unit of claim 1, wherein the controller is configured to examine strengths of wireless signals received by the communication device from a beacon device and determine one or more of: (a) whether a door of the vehicle is open or closed based on the strengths of the wireless signals that are received or (b) whether a door latch of the vehicle is open or closed based on the strengths of the wireless signals that are received.

5. The vehicle sensor unit of claim 1, wherein the vehicle is a first vehicle and the communication device is configured to communicate with a second sensor unit disposed onboard a second vehicle to receive one or more of an identification, direction of movement, or speed of the second vehicle from the second sensor unit, and the controller is configured to determine whether the second vehicle is in a same multi-vehicle system as the communication device, the controller, and the sensor.

6. A vehicle sensor unit comprising:
a communication device configured to communicate with one or more other sensor units, a controller of a vehicle system on which the vehicle sensor unit is disposed, and one or more sensors;
a sensor configured to sense one or more characteristics of a vehicle on which the vehicle sensor unit is disposed; and
a controller configured to determine one or more operating conditions of the vehicle based on the one or more characteristics that are sensed by the sensor, the controller configured to control the communication device to communicate the one or more characteristics, the one or more operating conditions, or both the one or more characteristics and the one or more operating conditions, wherein the communication device and the sensor are configured to be disposed onboard the vehicle that does not have an internal source of electric power the controller to examine strengths of wireless signals received by the communication device from a beacon device and determine one or more of: (a) whether a door of the vehicle is open or closed based on the strengths of the wireless signals that are received or (b) whether a door latch of the vehicle is open or closed based on the strengths of the wireless signals that are received.

7. The vehicle sensor unit of claim 6, wherein the communication device is configured to join a wireless network onboard the vehicle system or another vehicle system for communicating the one or more characteristics, the one or more operating conditions, or both the one or more characteristics and the one or more operating conditions.

8. The vehicle sensor unit of claim 6, wherein the sensor includes a global navigation satellite system receiver and the controller is configured to determine a location of the vehicle based on output from the global navigation satellite system receiver and wherein preferably the communication device is configured to wirelessly communicate the location of the vehicle to another vehicle system moving by the vehicle.

9. The vehicle sensor unit of claim 6, wherein the communication device is configured to communicate with a second sensor unit disposed onboard other vehicles in the same vehicle system and wherein preferably the communication device is configured to receive one or more of an identification, direction of movement, or speed of the vehicle from the one or more other sensor units onboard the other vehicles, and the controller is configured to determine whether the other vehicle is in the same vehicle system as the communication device, the controller, and the sensor.

10. The vehicle sensor unit of claim 6, wherein the controller is configured to activate the communication device from a deactivated or dormant state based on the one or more characteristics that are sensed.

11. The vehicle sensor unit of claim 10, wherein the controller is configured to activate the communication device responsive to the sensor detecting movement of the vehicle.

12. The vehicle sensor unit of claim 10, wherein the sensor is a pressure sensor configured to measure a brake pipe pressure of the vehicle system and the controller is configured to activate the communication device responsive to the sensor detecting a decrease in the brake pipe pressure.

13. The vehicle sensor unit of claim 6, wherein the sensor is a radio frequency identification (RFID) reader and the controller is configured to determine that a door of the vehicle is open or closed based on an ability of the RFID reader to read an RFID tag coupled with the vehicle.

14. The vehicle sensor unit of claim 6, wherein the sensor is configured to sense motion of the vehicle, and the controller is configured to identify truck hunting of the vehicle based on the motion that is sensed.

15. A method comprising:
sensing one or more characteristics of a vehicle using one or more sensors of a sensor unit disposed on the vehicle;
communicating the one or more characteristics to a controller of the vehicle;
determining one or more operating conditions of the vehicle based on the one or more characteristics that are sensed by the sensor; and
communicating the one or more characteristics, the one or more operating conditions, or both the one or more characteristics and the one or more operating conditions using a communication device, wherein the communication device and the sensor are configured to be disposed onboard the vehicle that does not have an internal source of electric power.
